# EUROPÄISCHE PATENTANMELDUNG

(11) **EP 0 994 288 A1**
(43) Veröffentlichungstag der Anmeldung: **19.04.2000**
(21) Anmeldenummer: 98116994.9
(22) Anmeldetag: 08.09.1998
(51) Int. Cl.: F16L 41/00, F16L 41/02, G01F 15/18

(54) **Vorrichtung zum Verbinden einer Volumenstrom-Messeinrichtung mit einer flüssigkeitsführenden Rohrleitung**

(71) Anmelder: Beninga, Ewald, 60549 Frankfurt (DE)
(72) Erfinder: Beninga, Ewald, 60549 Frankfurt (DE)

(57) **Zusammenfassung**

Eine Vorrichtung zum Verbinden einer Volumenstrom-Messeinrichtung (12) mit einer flüssigkeitsführenden Rohrleitung (1), insbesondere einer Wasseruhr mit einer Wasserleitung, ist als rechtwinklig in die Rohrleitung (1) einsetzbarer Hohlzylinder (13) gestaltet. Dieser hat nahe einer Stirnseite einen radialen Flüssigkeitseinlass (15) und dazu radial gegenüber einen Flüssigkeitsauslass (16) und weist axiale Strömungskanäle (20, 21) zum Verbinden des Flüssigkeitseinlasses (15) und des Flüssigkeitsauslasses (16) jeweils mit einem als Einlass und einem als Auslass dienenden Anschluss (17, 18) der Volumenstrom-Messeinrichtung (12) auf.

## Beschreibung

Die Erfindung betrifft eine Vorrichtung zum Verbinden einer Volumenstrom-Messeinrichtung mit einer flüssigkeitsführenden Rohrleitung, insbesondere einer Wasseruhr mit einer Wasserleitung.

Wasseruhren haben üblicherweise mit axialem Abstand zueinander einen als Einlass und einen als Auslass für den zu messenden Volumenstrom dienenden Anschluss. Wenn man eine solche Wasseruhr mit einer flüssigkeitsführenden Rohrleitung verbinden will, dann durchtrennt man üblicherweise die Rohrleitung und schließt jeweils ein Ende der Rohrleitung an jeden Anschluss der Wasseruhr an, was jedoch einen beträchtlichen Aufwand darstellt.

Der Erfindung liegt das Problem zugrunde, eine Vorrichtung der eingangs genannten Art so auszubilden, dass eine Volumenstrom-Messeinrichtung mit möglichst geringem Aufwand mit einer Rohrleitung verbunden werden kann.

Dieses Problem wird erfindungsgemäß dadurch gelöst, dass die Vorrichtung als rechtwinklig in die Rohrleitung einsetzbarer Hohlzylinder gestaltet ist, welcher nahe einer Stirnseite einen radialen Flüssigkeitseinlass und dazu radial gegenüber einen Flüssigkeitsauslass hat und der axiale Strömungskanäle zum Verbinden des Flüssigkeitseinlasses und des Flüssigkeitsauslasses jeweils mit einem als Einlass und einem als Auslass dienenden Anschluss der Volumenstrom-Messeinrichtung aufweist.

Ein solcher Hohlzylinder kann in einen quer zu der Rohrleitung in diese hineinführenden Stutzen derart eingesetzt werden, dass er mit seinem Flüssigkeitseinlass und dem gegenüberliegenden Flüssigkeitsauslass in die Rohrleitung gelangt und die Volumenstrom-Messeinrichtung mit ihrem einen Anschluss axial in den stirnwandseitigen Anschluss des Hohlzylinders ragen lässt. Dadurch kann die Zufuhr und Abfuhr der Flüssigkeit aus der Rohrleitung zur Volumenstrom-Messeinrichtung und von ihr zurück in die Rohrleitung durch diesen Hohlzylinder erfolgen, so dass keine Verlegung von zusätzlichen Rohrleitungen erforderlich wird. Dank des erfindungsgemäßen Hohlzylinders braucht deshalb die Rohrleitung nicht durchtrennt zu werden. Es genügt vielmehr eine Bohrung in ihrer Mantelfläche, durch welche hindurch man den Hohlzylinder in die Rohrleitung einführt. Hierdurch wird es möglich, eine komplette Volumenstrom-Messeinrichtung in eine unter Druck stehende Rohrleitung einzubauen, indem man dabei wie in der DE 93 16 819.5 beschrieben vorgeht. Der erfindungsgemäße Hohlzylinder kann zusammen mit einer Volumenstrom-Messeinrichtung in ein Gehäuse eingeschleust werden, welches vorübergehend an die Rohrleitung angebracht wird. Innerhalb des Gehäuses erzeugt man auch die zum Einführen des Hohlzylinders erforderliche Bohrung in der Rohrleitung.

Vorteilhafte Weiterbildungen der Erfindung sind in den Unteransprüchen gekennzeichnet. Ihre spezifischen Vorteile ergeben sich aus der nachfolgenden Beschreibung eines Ausführungsbeispiels der Erfindung. Hierbei wird auf eine Zeichnung Bezug genommen. Diese zeigt in
- Fig.1: einen Längsschnitt durch eine Rohrleitung mit einer Manschette und einem angeschlossenen Abzweigelement und einem erfindungsgemäßen Hohlzylinder in vereinfachter Darstellung,
- Fig.2: eine gegenüber Fig.1 im Maßstab vergrößerte, detailliertere Darstellung des Bereiches des Hohlzylinders und der angrenzenden Bauteile.

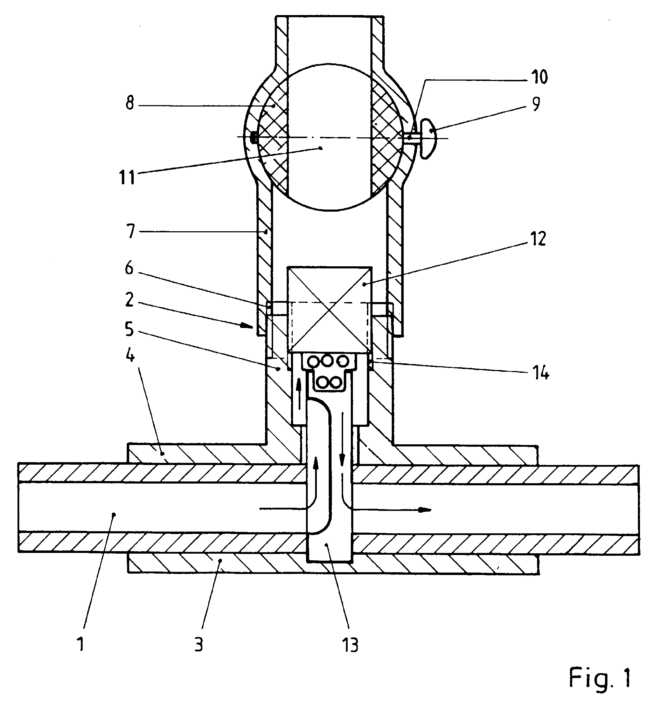

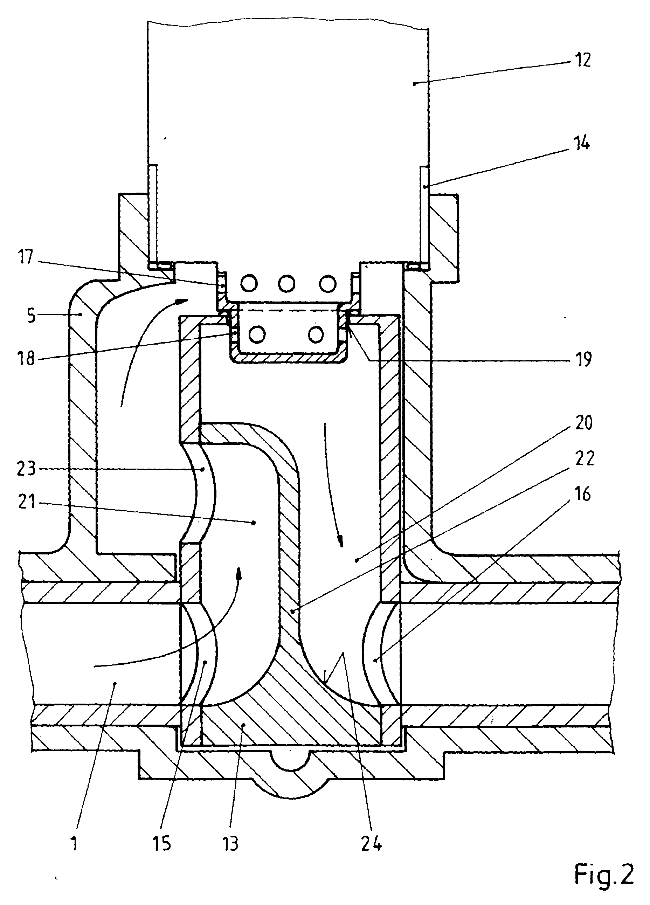

Die Figur 1 zeigt einen Längsschnitt durch einen Abschnitt einer Rohrleitung 1, auf der ein Abzweigelement 2 montiert ist. Dieses Abzweigelement 2 besteht aus einem Manschettenunterteil 3, einem Manschettenoberteil 4, einem mit dem Manschettenoberteil 4 eine bauliche Einheit bildenden Stutzen 5 und einem darauf auf ein Gewinde 6 aufgeschraubten Gehäuse 7, welches mit einer als Kugelhahn ausgebildeten Absperrvorrichtung 8 versehen ist. Diese Absperrvorrichtung 8 ist mittels eines Stellhebels 9 und einer Achse 10 zu öffnen und zu schließen. In der dargestellten, geöffneten Position gibt die Absperrvorrichtung 8 einen Durchlass 11 frei, durch welchen eine Volumenstrom-Messeinrichtung 12 mit einem Hohlzylinder 13 durch das Gehäuse 7 in den Stutzen 5 eingeschleust werden kann. Der Hohlzylinder 13 ist so ausgeführt, dass durch ihn hindurch Flüssigkeit von der Leitung 1 zur Volumenstrom-Messeinrichtung 12 und von dort zurück in die Leitung 1 strömen kann, was in Figur 1 durch Pfeile verdeutlicht wurde und genauer anhand der Figur 2 erläutert wird.

Zur Montage der Volumenstrom-Messeinrichtung 12 montiert man auf die Rohrleitung 1 zunächst das Manschettenunterteil 3 und das Manschettenoberteil 4 mit dem Stutzen 5. Dabei kann man die Rohrleitung 1 zuvor mit einer diese verstärkenden Kunststoffmasse umschließen. Anschließend schraubt man das Gehäuse 7 auf den Stutzen 5 und auf das Gehäuse 7 einen Aufsatz mit einem Werkzeug.

Nach Öffnen der Absperrvorrichtung 8 bewegt man das Werkzeug nach unten und erzeugt mit ihm in der Rohrleitung 1 eine Öffnung. Danach kann man das Werkzeug wieder zurückbewegen und die Absperrvorrichtung 8 schließen. Anschließend ist ein Abschrauben des Aufsatzes und ein Aufschrauben eines anderen Aufsatzes mit der Volumenstrom-Messeinrichtung 12 und dem Hohlzylinder 13 möglich. Diese beiden Bauteile kann man gemeinsam nach erneutem Öffnen der Absperrvorrichtung 8 in den Stutzen 5 einschieben und in ein dort vorgesehenes Innengewinde 14 schrauben. Anschließend kann man das Gehäuse 7 von dem Stutzen 5 abschrauben, wodurch die Montage der Volumenstrom-Messeinrichtung 12 und des Hohlzylinders 13 abgeschlossen ist.

Die Figur 2 verdeutlicht die Gestaltung des Hohlzylinders 13. Dieser hat innerhalb der Leitung 1 radial gegenüberliegend einen Flüssigkeitseinlass 15 und einen Flüssigkeitsauslass 16. Die Volumenstrom-Messeinrichtung 12 hat als Einlass dienende, obere Anschlüsse 17 und als Auslass dienende, untere Anschlüsse 18. Die unteren Anschlüsse 18 ragen dichtend in eine Öffnung 19 in der oberen Stirnfläche des Hohlzylinders 13 hinein. Hierdurch haben die Anschlüsse 18 über einen axialen Strömungskanal 20 in dem Hohlzylinder 13 Verbindung mit dem Flüssigkeitsauslass 16. Ein zweiter, axialer Strömungskanal 21 ist durch eine Trennwand 22 vom ersten Strömungskanal 20 getrennt und verbindet den Flüssigkeitseinlass 15 mit einer axial beabstandeten und mit ihm auf einer Linie liegenden Öffnung 23. Von dieser Öffnung 23 vermag die Flüssigkeit im Inneren des Stutzens 5 zu dem Anschluss 17 der Volumenstrom-Messeinrichtung 12 zu gelangen. Beispielshaft wurde eine Abrundung 24 positioniert, welche für eine möglichst verlustarme Umlenkung der Flüssigkeit sorgt. Entsprechende Abrundungen sind auch beim Flüssigkeitseinlass 15 und der Öffnung 23 vorgesehen.

### Bezugszeichenliste

- 1: Rohrleitung
- 2: Abzweigelement
- 3: Manschettenunterteil
- 4: Manschettenoberteil
- 5: Stutzen
- 6: Gewinde
- 7: Gehäuse
- 8: Absperrvorrichtung
- 9: Stellhebel
- 10: Achse
- 11: Durchlass
- 12: Volumenstrom-Messeinrichtung
- 13: Hohlzylinder
- 14: Innengewinde
- 15: Flüssigkeitseinlass
- 16: Flüssigkeitsauslass
- 17: Anschluss
- 18: Anschluss
- 19: Öffnung
- 20: Strömungskanal
- 21: Strömungskanal
- 22: Trennwand
- 23: Öffnung
- 24: Abrundung

## Patentansprüche

1. Vorrichtung zum Verbinden einer Volumenstrom-Messeinrichtung mit einer flüssigkeitsführenden Leitung, insbesondere einer Wasseruhr mit einer Wasserleitung, **dadurch gekennzeichnet**, dass die Vorrichtung als rechtwinklig in die Rohrleitung (1) einsetzbarer Hohlzylinder (13) gestaltet ist, welcher nahe einer Stirnseite einen radialen Flüssigkeitseinlass (15) und dazu radial gegenüber einen Flüssigkeitsauslass (16) hat und der axiale Strömungskanäle (20, 21) zum Verbinden des Flüssigkeitseinlasses (15) und des Flüssigkeitsauslasses (16) jeweils mit einem als Einlass und einem als Auslass dienenden Anschluss (17, 18) der Volumenstrom-Messeinrichtung (12) aufweist.

2. Vorrichtung nach Anspruch 1, **dadurch gekennzeichnet**, dass der Hohlzylinder (13) an seiner dem Flüssigkeitseinlass (15) und Flüssigkeitsauslass (16) gegenüberliegenden Stirnseite eine Öffnung (19) aufweist, welche mit dem Flüssigkeitseinlass (15) oder Flüssigkeitsauslass (16) über den einen axialen Strömungskanal (20, 21) Verbindung hat und die zum dichtenden Einführen eines Anschlusses (18) der Volumenstrom-Messeinrichtung (12) dient und dass der Hohlzylinder (13) in seiner Mantelfläche axial beabstandet zu dem Flüssigkeitseinlass (15) oder Flüssigkeitsauslass (16) eine weitere Öffnung (23) aufweist, über die eine Verbindung mit dem zweiten Anschluss (17) der Volumenstrom-Messeinrichtung (12) erfolgt.

3. Vorrichtung nach den Ansprüchen 1 oder 2, **dadurch gekennzeichnet**, dass die beiden Strömungskanäle (20, 21) durch eine axial in dem Hohlzylinder (13) verlaufende Trennwand (22) voneinander getrennt sind, welche zum Flüssigkeitseinlass (15), der Öffnung (23) und dem Flüssigkeitsauslass (16) eine radial nach außen gerichtete Abrundung (24) aufweist.
